(19) Europäisches Patentamt / European Patent Office / Office européen des brevets

(11) EP 1 872 161 B1

(12) **EUROPEAN PATENT SPECIFICATION**

(45) Date of publication and mention of the grant of the patent:
**09.09.2009 Bulletin 2009/37**

(21) Application number: **06749255.3**

(22) Date of filing: **05.04.2006**

(51) Int Cl.:
*G02B 5/30* (2006.01) *G02F 1/1335* (2006.01)

(86) International application number:
**PCT/US2006/012508**

(87) International publication number:
**WO 2006/110401 (19.10.2006 Gazette 2006/42)**

(54) **STRUCTURED ORIENTED FILMS FOR USE IN DISPLAYS**

STRUKTURIERTE ORIENTIERTE FILME ZUR VERWENDUNG IN DISPLAYS

FILMS ORIENTES STRUCTURES A UTILISER DANS DES ECRANS

(84) Designated Contracting States:
**AT BE BG CH CY CZ DE DK EE ES FI FR GB GR HU IE IS IT LI LT LU LV MC NL PL PT RO SE SI SK TR**

(30) Priority: **08.04.2005 US 669614 P**

(43) Date of publication of application:
**02.01.2008 Bulletin 2008/01**

(73) Proprietor: **3M Innovative Properties Company**
**St. Paul MN 55133-3427 (US)**

(72) Inventors:
- **BATTIATO, James M.**
  **3M Center**
  **Saint Paul, Minnesota 55133-3427 (US)**
- **MERRILL, William W.**
  **3M Center**
  **Saint Paul, Minnesota 55133-3427 (US)**
- **WHITNEY, LeLand R.**
  **3M Center**
  **Saint Paul, Minnesota 55133-3427 (US)**
- **EPSTEIN, Kenneth A.**
  **3M Center**
  **Saint Paul, Minnesota 55133-3427 (US)**
- **BROTT, Robert L.**
  **3M Center**
  **Saint Paul, Minnesota 55133-3427 (US)**
- **BIERNATH, Rolf W.**
  **3M Center**
  **Saint Paul, Minnesota 55133-3427 (US)**
- **O'NEILL, Mitsuko T.**
  **3M Center**
  **Saint Paul, Minnesota 55133-3427 (US)**
- **JOHNSON, Stephen A.**
  **3M Center**
  **Saint Paul, Minnesota 55133-3427 (US)**
- **JOHNSON, Matthew B.**
  **3M Center**
  **Saint Paul, Minnesota 55133-3427 (US)**
- **HENNEN, Daniel W.**
  **3M Center**
  **Saint Paul, Minnesota 55133-3427 (US)**
- **BLACK, William B.**
  **3M Center**
  **Saint Paul, Minnesota 55133-3427 (US)**
- **O'NEILL, Mark B.,**
  **3M Center**
  **Saint Paul, Minnesota 55133-3427 (US)**
- **BRYAN, William J.,**
  **3M Center**
  **Saint Paul, Minnesota 55133-3427 (US)**
- **WILSON, Dennis W.,**
  **3M Center**
  **Saint Paul, Minnesota 55133-3427 (US)**
- **DENKER, Martin E.,**
  **3M Center**
  **Saint Paul, Minnesota 55133-3427 (US)**
- **KOWITZ, David A.,**
  **3M Center**
  **Saint Paul, Minnesota 55133-3427 (US)**

(74) Representative: **Vossius & Partner**
**P.O. Box 86 07 67**
**81634 München (DE)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

(Cont. next page)

(56) References cited:

**EP-A- 1 223 460** **EP-A- 1 498 770**
**WO-A-01/27663** **WO-A-02/04858**
**WO-A-98/39755** **WO-A-20/04079414**
**US-A- 5 731 886** **US-A- 6 075 581**
**US-A1- 2001 036 546** **US-A1- 2003 058 383**
**US-A1- 2003 071 947** **US-A1- 2004 005 451**
**US-A1- 2004 189 908** **US-B1- 6 366 335**

- **PATENT ABSTRACTS OF JAPAN vol. 2003, no. 11, 5 November 2003 (2003-11-05) & JP 2003 207628 A (FUJI PHOTO FILM CO LTD), 25 July 2003 (2003-07-25)**
- **PATENT ABSTRACTS OF JAPAN vol. 2002, no. 07, 3 July 2002 (2002-07-03) & JP 2002 090527 A (NITTO DENKO CORP), 27 March 2002 (2002-03-27)**

## Description

### Field

The present invention relates to uniaxially stretched articles, such as polymeric films, having structured surfaces, and to processes for making such articles.

### Background

Optical articles having structured surfaces, and processes for providing such articles are known. See for example, U.S. Patents 6,096,247 and 6,808,658, and published application U.S. 2002/0154406 A1. The structured surfaces disclosed in these references include microprisms (such as microcubes) and lenses. In this regard, the term structured surface refers to a surface that has at least one geometric feature thereon, and where a geometric feature refers to a predetermined shape or shapes on the surface. Typically these structures are created on the surface of a suitable polymer by, for example embossing, extrusion or machining. Diffuse reflective article are disclosed in US 2004/0005451 A1.

Birefringent articles having structured surfaces are also known. See, for example, U.S. Patents 3,213,753; 4,446,305; 4,520,189; 4,521,588; 4,525,413; 4,799,131; 5,056,030; 5,175,030 and published applications WO 2003/0058383 A1 and WO 2004/062904 A1.

Processes for manufacturing stretched films are also known. Such processes are typically employed to improve the mechanical and physical properties of the film. These processes include biaxial stretching techniques and uniaxial stretching techniques. See for example PCT WO 00/29197, U.S. Patents 2,618,012; 2,988,772; 3,502,766; 3,807,004; 3,890,421; 4,330,499; 4,434,128; 4,349,500; 4,525,317 and 4,853,602. See also U.S. Patents 4,862,564; 5,826,314; 5,882,774; 5,962,114 and 5,965,247. See also Japanese Unexamined Patent Publications Hei 5-11114; 5-288931; 5-288932; 6-27321 and 6-34815. Still other Japanese Unexamined Applications that disclose processes for stretching films include Hei 5-241021; 6-51116; 6-51119; and 5-11113. See also WO 2002/096622 A1.

### Summary

Disclosed optical control films or film combinations may be used in a collection of optical films to form a display system including, for example, a brightness enhancement film or turning film. The invention provides an article for use in a display with a backlight as defined according to the claims. The display system can comprise at least one of two particular embodiments. In the first particular embodiment, the display system comprises a micro-structured film or layer in which the structure above the land comprises an optically anisotropic (e.g. birefringent) material. This first embodiment will be hereafter referred to as a birefringent structured film or layer. In the second particular embodiment, the display system comprises a substantially truly uniaxially stretched elongate micro-structure film or layer. The film or layer of either particular embodiment provides at least one optical function to the display system as explained below. Moreover, the film or layer of either particular embodiment may be combined with other layers or films in the various display and projection configurations, including, for example, hand-held, instrumentation, monitoring, computer and/or TV applications.

As used herein, the following terms and phrases have the following meaning.

"Birefringent surface" means a surface portion of a body proximate a birefringent material in the body.

"Cross sectional shape", and like terms, obvious variations thereof, means the configuration of the periphery of the geometric feature defined by the second in-plane axis and the third axis. The cross sectional shape of the geometric feature is independent of its physical dimension.

"Dispersion" means the variation of refractive index with wavelength. Dispersion may vary along different axes differently in an anisotropic material.

"Stretch ratio", and obvious variations thereof, means the ratio of the distance between two points separated along a direction of stretch after stretching to the distance between the corresponding points prior to stretching.

"Geometric feature", and obvious variations thereof, means the predetermined shape or shapes present on the structured surface.

"Macro" is used as a prefix and means that the term that it modifies has a cross-sectional profile that has a height of greater than 1 mm.

"Metallic surface" and obvious variations thereof, means a surface coated or formed from a metal or a metal alloy which may also contain a metalloid. "Metal" refers to an element such as iron, gold, aluminum, etc., generally characterized by ductility, malleability, luster, and conductivity of heat and electricity which forms a base with the hydroxyl radical and can replace the hydrogen atom of an acid to form a salt. "Metalloid" refers to nonmetallic elements having some of the properties of a metal and/or forming an alloy with metal (for example, semiconductors) and also includes

nonmetallic elements which contain metal and/or metalloid dopants.

"Micro" is used as a prefix and means that the term it modifies has a cross-sectional profile that has a height of 1 mm or less. Preferably the cross-sectional profile has a height of 0.5 mm or less. More preferably the cross-sectional profile is 0.05 mm or less.

"Oriented" means having an anisotropic dielectric tensor with a corresponding anisotropic set of refractive indices.

"Orientation" means a state of being oriented.

"Uniaxial stretch", including obvious variations thereof, means the act of grasping opposite edges of an article and physically stretching the article in only one direction. Uniaxial stretch is intended to include slight imperfections in uniform stretching of the film due to, for example, shear effects that can induce momentary or relatively very small biaxial stretching in portions of the film.

"Uniaxial orientation" means that two of the principle refractive indices are substantially the same.

"Structure surface" means a surface that has at least one geometric feature thereon.

"Structured surface" means a surface that has been created by any technique that imparts a desired geometric feature or plurality of geometric features to a surface.

"Wavelength" means the equivalent wavelength measured in a vacuum.

In the case of layered films, "uniaxial" or " truly uniaxial" are intended to apply to individual layers of the film unless otherwise specified.

## Brief Description of the Drawings

The invention may be more completely understood in the following detailed description of various embodiments in connection with the accompanying drawings, in which:

Figure 1 is a sectional view of a precursor film;
Figure 2 is a sectional view of one film embodiment;
Figures 3A-3D are sectional views of some alternative film embodiments;
Figures 4A-4D are illustrations useful in determining how to calculate the shape retention parameter (SRP);
Figures 5A-5W illustrate sectional views of some alternative profiles of geometric features;
Figure 6 is a schematic representation of a process of manufacture;
Figure 7 is a perspective view of a structure surface film both before and after the stretching process, wherein the film after stretching is uniaxially oriented;
Figure 8 is a schematic illustration of a method for uniaxially stretching a film, also illustrating a coordinate axis showing a machine direction (MD), a normal, i.e., thickness, direction (ND), a transverse direction (TD); and
Figure 9 is an end view of an article having a structured surface of varying cross-sectional dimensions.

The invention is amenable to various modifications and alternative forms. Specific features are shown in the drawings by way of example only. The intention is not to limit the invention to the particular embodiments described. Instead, the intention is to cover all modifications, equivalents, and alternatives falling within the scope of the invention as claimed.

## Detailed Description

The disclosed articles and films generally comprise a body portion and a surface structure portion. Figure 1 represents an end view of a pre-cursor film having a first orientation state while Figure 2 represents an end view of one embodiment of the resulting film having a second orientation state Figures 3A-3D represent end views of some alternative embodiments.

Precursor film 9 comprises a body or land portion 11 having an initial thickness (Z) and a surface portion 13 having a height (P). Surface portions 13 comprises a series of parallel geometric features 15 here shown as right angle prisms. Geometric features 15 each have a base width (BW) and a peak-to-peak spacing (PS). The precursor film has a total thickness T which is equal to the sum of P + Z.

With specific reference to Figure 2, the film 10 comprises a body or land portion 12 having a thickness (Z') and a surface portion 14 having a height (P'). Surface portion 14 comprises a series of parallel geometric features 16 comprising prisms. Geometric features 16 each have a base width (BW') and a peak-to-peak spacing (PS'). The film has a total thickness T' which is equal to P' + Z'.

The relationship between the dimensions of the precursor film and the resulting film are $T'<T$; $P'<P$; $Z'<Z$; usually $BW'<BW$; and $PS'<PS$.

Body or land portions 11, 12 comprise the portion of the article between bottom surfaces 17 and 19 and the

lowest point of the surface portions 15,16. In some cases, this may be a constant dimension across the width (W,W') of the article. In other cases, this dimension may vary due to the presence of geometric features having varying land thicknesses. See Figure 9. In Figure 9, the land thickness is represented by Z".

The precursor film 9 and the resulting film 10 each have a first in-plane axis 18, a second in-plane axis 20 and a third axis 22 in the thickness direction. The first in-plane axis is substantially parallel to the direction of stretching as discussed herein after. In Figures 1 and 2, this axis is normal to the end of films 9 and 10. These three axes are mutually orthogonal with respect to one another.

The cross-sectional shape of at least one geometric feature of the film or article of the present invention substantially mimics the cross-sectional shape of the geometric feature of its precursor. This fidelity in shape is especially important when making optical devices where uniform redistribution of incident light is desired. This is true whether the initial cross-sectional shape of the feature comprises flat or curved surfaces. The shape retention of the article and process is determined by calculating the Shape Retention Parameter (SRP).

SRP for a given feature is determined as follows. An image is acquired of a cross-section of a film having the feature before stretching. The sectioning plane is the plane defined by the second in-plane axis 20 and the third axis 22 and is orthogonal to the direction in which the film is to be stretched. One representative example of the structural features present is chosen, and is referred to as the feature. A line is superimposed on the image at the junction of the body portion 11 and the surface portion 13. This is the Feature Baseline (FB). The area of the feature above its baseline is then calculated. This is the Unstretched Feature Area (UFA).

An image is then acquired of a cross-section of the film after stretching. The sectioning plane is the plane defined by the second in-plane axis and the third axis. If the film has been stretched by a non-continuous, or "batch" process, such as on a laboratory film stretching instrument, it will be possible to select the same feature as that selected when examining the film specimen before stretching. If the film has been stretched on a continuous film-making line, the feature should be selected from an appropriate location on the stretched film web, analogous to the location that was chosen on the unstretched web, as will be appreciated by one skilled in the film making art. A Feature Baseline (FB) is again established, and the area of the stretched film feature is then calculated. This is the Stretched Feature Area (SFA).

The ratio UFA/SFA is then calculated. This is the Image Ratio (IR). The image of the stretched film feature is then scaled up proportionately so as to have the same area as the image of the unstretched film feature. This is done by expanding the image in each of the height and width dimensions by a factor of the square root of IR. The scaled up image of the feature of the stretched film is then superimposed on the image of the feature of the unstretched film in such a way that their Feature Baselines coincide. The superimposed images are then translated with respect to one another along their common baseline, until the location is found that maximizes the area of their overlap. This and all the aforementioned and subsequent mathematical and numerical operations can be done simply on a computer with appropriately written code, as will be apparent to one skilled in the art.

The area shared by both of the superimposed images in this optimally superimposed condition is the Common Area (CA). The ratio CA/UFA is then calculated. This ratio is the Common Area Ratio (CAR). For a stretch that results in perfect shape retention, the CAR will be unity. For any deviation from perfect shape retention, the CAR will be a positive number less than unity.

For any particular film, CAR will differ from unity by an amount that depends at least on the shape of the feature, the stretch ratio, and the degree to which the stretching operation approaches a truly uniaxially orienting stretch. Other factors may also be involved. In order to quantify the degree of deviation from perfect shape retention, it is necessary to develop another parameter, the Shape Retention Parameter (SRP). The SRP is a measure which indicates proportionately where a film having a structured surface falls, on a continuum, from perfect shape retention at one extreme, to a selected reference point characteristic of typical industrial practice, at the other extreme. We have chosen as such a reference point the performance, for the same feature shape and stretch ratio, of an idealized film tenter (transverse orienter) operated efficiently in a continuous mode. The major axis of the features on the film's structured surface is assumed to be parallel to the crossweb direction, which is the stretch direction. Edge effects and all other process non-idealities are neglected, as are non-idealities of the film material itself, such as changes in density upon stretching, for example. For this ideal tenter case, then, all the transverse stretch imparted to the film is accommodated by shrinkage of the film, by the same ratio, and in the thickness dimension only. Because the hypothetical tenter is ideal, there is no shrinkage of the film in the machine or downweb direction.

Image Ratio, for a film that stretches ideally, is the same as the stretch ratio. If the Image Ratio is different from the stretch ratio, this is indicative of non-idealities in the system due to, for example, Poisson's Ratio, density changes (e.g., due to crystallization during stretch) and variations between the local stretch ratio and the nominal ideal stretch ratio.

The following will be described with reference to Figure 4A-4D. The calculations may easily be performed by computer using algorithms know to those skilled in the art. The calculation begins with the experimentally obtained image of the feature of the unstretched film which was used already to calculate the CAR. In Figure 4A, the feature shown is a right triangle feature. The right triangle is shown in Fig. 4A only for illustrative purposes as the methodology detailed

here is generally applicable to any feature shape, whether having or not having symmetry, and whether having straight (prismatic) or curved (lenticular) surfaces. The methodology is also generally applicable to "dished" features, or features having complex shapes, such as S-shaped features, hook-shaped features, or "mushroom-cap" features.

The image of Fig. 4A is computationally converted to the image of Fig. 4B by shrinking only the height dimension by a factor of the stretch ratio used in making the film in question. This simulates what would have happened to the film surface feature in the "ideal tenter" for the feature shape and stretch ratio in question. The image is then converted from that of Fig. 4B to that of Fig. 4C by scaling it up in each of the height and width dimensions by a factor of the square root of the stretch ratio. Thus, the image of Fig. 4C has an area identical to that of the image of Fig. 4A. The images of Fig. 4A and Fig. 4C are then superimposed and translated along their common baseline until the position of maximum overlap area is found. This is shown in Fig. 4D. The common area of this figure (the crosshatched area which is common to both the original feature image and the computationally processed feature image) is calculated, and the ratio of this area to the area of the image of Fig. 4A is calculated. This value is the Common Area Ratio for the Ideal Tenter (CARIT), for the given feature shape and stretch ratio. It will be understood that this calculation must be done independently for each film specimen, as the CARIT is a strong function of both the unstretched feature shape and the stretch ratio employed.

Finally, SRP is calculated using the following formula:

$$SRP = (CAR\text{-}CARIT) / (1\text{-}CARIT)$$

For perfect shape retention, SRP is unity. For the case of a hypothetical film stretched on an "ideal" tenter, CAR equals CARIT, and SRP is zero. Thus, SRP is a measure which indicates proportionately where a film having a structured surface falls, on a continuum, from perfect shape retention at one extreme, to a selected reference point characteristic of typical industrial practice, at the other extreme. Films having SRP very close to 1.00 show a very high degree of shape retention. Films having SRP very close to 0.00 show a low degree of shape retention for the feature shape and stretch ratio employed. In the present invention, the films have an SRP of at least 0.1.

It will be understood by one skilled in the art that a film made on a standard film tenter or by other means may well have an SRP value which is less than zero, due to the many non-idealities which are possible, as discussed above. The "ideal tenter" is not meant to represent the worst possible shape retention which can result. Rather, it is a point of reference useful for comparing different films on a common scale.

In one embodiment of the present invention, a film having a structured surface has a value of SRP of about 0.1 to 1.00. In another embodiment of the present invention, a film having a structured surface has a value of SRP of about 0.5 to 1.00. In another embodiment of the present invention, a film having a structured surface has a value of SRP of about 0.7 to 1.00. In another embodiment of the present invention, a film having a structured surface has a value of SRP of about 0.9 to 1.00.

In another aspect, the film possesses uniaxial orientation. The uniaxial orientation may be measured by determining the difference in the index of refraction of the film along the first in-plane axis ($n_1$), the index of refraction along the second in-plane axis ($n_2$), and the index of refraction along the third axis ($n_3$). Uniaxially oriented films of an embodiment have $n_1 \neq n_2$ and $n_1 \neq n_3$. Preferably the films of particular embodiments are truly uniaxially oriented. That is, $n_2$ and $n_3$ are substantially equal to one another and relative to their differences with $n_1$.

In yet another embodiment, the films posses a relative birefringence of 0.3 or less. In another embodiment, the relative birefringence is less than 0.2 and in yet another embodiment it is less than 0.1. Relative birefringence is an absolute value determined according to the following formula:

$$| n_2 - n_3 | \ / \ |n_1 - (n_2 + n_3) \ / \ 2 |$$

Relative birefringence may be measured in either the visible or the near infra-red spectra. For any given measurement, the same wavelength should be used. A relative birefringence of 0.3 in any portion of either spectra is satisfactory to meet this test.

The films of particular embodiments comprise at least one prismatic or lenticular feature that may be an elongate structure. The structure is preferably generally parallel to the first in-plane axis of the film. As shown in Figure 2, the structured surface comprises a series of prisms 16. However, other geometric features and combinations thereof may be used. For example, Figure 3A shows that the geometric features do not have to have apices nor do they need to touch each other at their bases.

Figure 3B shows that the geometric features may have rounded peaks and curved facets. Figure 3C shows that the peaks of the geometric features may be flat.

Figure 3D shows that both opposing surfaces of the film may have a structured surface.

Figures 5A-5W illustrate other cross-section shapes that may be used to provide the structured surface. These Figures further illustrate that the geometric feature may comprise a depression (See Figs. 5A-I and 5T) or a projection (see Figs. 5J-5S and 5U-5W). In the case of features that comprise depressions, the elevated area between depressions may be considered to be a projection-type feature as shown in Figure 3C.

Various feature embodiments may be combined in any manner so as to achieve a desired result. For example horizontal surfaces may separate features that have radiused or flat peaks. Moreover curved faces may be used on any of these features.

As can be seen from the Figures, the features may have any desired geometric shape. They may be symmetric or asymmetric with respect to the z-axis of the film. Moreover, the structured surface may comprise a single feature, a plurality of the same feature in a desired pattern, or a combination of two or more features arranged in a desired pattern. Additionally, the dimensions, such as height and/or width, of the features may be the same across the structured surface. Alternatively, they may vary from feature to feature.

The microstructure geometric features illustrated in Figure 2 either comprise or approximate a prism with an approximately triangular cross section. A particularly useful subset of such prisms are those with an approximate isosceles triangle cross section. Another useful subset has a triangular cross section with an apex angle of from about 60° to about 120°, preferably from about 80° to 100°, most preferably about 90°, e.g. a right angle prism. These attributes may be combined, e.g. a prismatic feature with an isosceles, right triangular cross section. Additionally the faces of the microstructure feature are flat or approximate a flat surface. These subsets of features can be particularly useful for films comprising such features used as a brightness enhancement film in a display application. The apex angle can be tuned in conjunction with the anisotropic set of refractive indices to adjust total internal reflection and the transmitted intensity fields for two orthogonal polarization states as a function of propagation angle within the viewing hemisphere.

In another embodiment, the microstructure geometric features comprise a saw tooth-like prism. As used herein a saw tooth-like prism has a vertical, or nearly vertical side that forms an approximately 90° angle with the land or body. See Figure 5J. In one useful embodiment, a saw-tooth-like prism may have has an angle of inclination from the land or body of from 2° to 15°.

It is also within the scope of the present invention that the features may be either continuous or discontinuous along the first in-plane axis.

Various embodiments of the film of particular embodiments comprise the following dimensional relationships as set forth in Figures 2 and 3A.

A process of particular embodiments generally comprises the steps of providing a structured surface polymeric film that is capable of being elongated by stretching and subsequently uniaxially stretching the film. The structured surface may either be provided concurrently with the formation of the film or it may be imparted to the first surface after the film has been formed. The process will be further explained with regard to Figures 6 and 7.

Figure 6 is a schematic representation of a method according to the present invention. In the method, a tool 24 comprising a negative version of the desired structured surface of the film is provided and is advanced by means of drive rolls 26A and 26B past an orifice (not shown) of die 28. Die 28 comprises the discharge point of a melt train, here comprising an extruder 30 having a feed hopper 32 for receiving dry polymeric resin in the form of pellets, powder, etc. Molten resin exits die 28 onto tool 24. A gap 33 is provided between die 28 and tool 24. The molten resin contacts the tool 24 and hardens to form a polymeric film 34. The leading edge of the film 24 is then stripped from the tool 24 at stripper roll 36 and is directed to uniaxial stretching apparatus 38. The stretched film may then be wound into a continuous roll at station 40.

It should be noted that film 34 may be wound into a roll, or cut into sheets and stacked before being stretched in apparatus 38. It should also be noted that film 34 may be cut into sheets after being stretched rather than being wound into a continuous roll.

The film 34 may optionally be pre-conditioned (not shown) before the uniaxial stretching. Additionally, the film 34 may be post-conditioned (not shown) after stretching.

A variety of techniques may be used to impart a structured surface to the film. These include batch and continuous techniques. They may involve providing a tool having a surface that is a negative of the desired structured surface; contacting at least one surface of the polymeric film to the tool for a time and under conditions sufficient to create a positive version of the desired structured surface to the polymeric film; and removing the polymeric film with the structured surface from the tool.

Although the die 28 and tool 24 are depicted in a vertical arrangement with respect to one another, horizontal or other arrangements may also be employed. Regardless of the particular arrangement, the die 28 provides the molten resin to the tool 24 at the gap 33.

The die 28 is mounted in a manner that permits it to be moved toward the tool 24. This allows one to adjust the gap 33 to a desired spacing. The size of the gap 33 is a factor of the composition of the molten resin, the desired body thickness, its viscosity, its viscoelastic responses, and the pressure necessary to essentially completely fill the tool

with the molten resin as will be understood by those in the art.

The molten resin is of a viscosity such that it preferably substantially fills, optionally with applied vacuum, pressure, temperature, ultrasonic vibration or mechanical means into the cavities of the tool 24. When the resin substantially fills the cavities of the tool 24, the resulting structured surface of the film is said to be replicated.

The negative surface of the tool can be positioned to create features across the width of the film (i.e., in the transverse (TD) direction) or along the length of the film (i.e., along the machine (MD) direction). Perfect alignment with the TD or MD direction is not required. Thus the tool may be slightly off angle from perfect alignment. Typically, this alignment is no more than about 20°.

In the case that the resin is a thermoplastic resin, it is typically supplied as a solid to the feed hopper 32. Sufficient energy is provided to the extruder 30 to convert the solid resin to a molten mass. The tool is typically heated by passing it over a heated drive roll 26A. Drive roll 26A may be heated by, for example circulating hot oil through it or by inductively heating it. The temperature of the tool 24 is typically from 20°C below the softening point of the resin to the decomposition temperature of the resin.

In the case of a polymerizable resin, including a partially polymerized resin, the resin may be poured or pumped directly into a dispenser that feeds the die 28. If the resin is a reactive resin, the method may include one or more additional steps of curing the resin. For example, the resin may be cured by exposure to a suitable radiant energy source such as actinic radiation such as ultraviolet light, infrared radiation, electron beam radiation, visible light, etc., for a time sufficient to harden the resin and remove it from the tool 24.

The molten film can be cooled by a variety of methods to harden the film for further processing. These methods include spraying water onto the extruded resin, contacting the unstructured surface of the tool with cooling rolls, or direct impingement of the film with air.

The previous discussion was focused on the simultaneous formation of the film and the structured surface. Another technique useful in the invention comprises contacting a tool to the first surface of a preformed film. Pressure, heat or pressure and heat are then applied to the film/tool combination until the desired structured surface is created in the film. Subsequently, the film is cooled and removed from the tool.

In yet another technique, a preformed film may be machined, such as by diamond turning, to create a desired structured surface thereon.

When a tool is used to create the structured surface, release agents may be used to facilitate removal of the structured surface film from the tool. The release agents may be a material applied as a thin layer to either the surface of the tool or the surface of the film. Alternatively, they may comprise an additive incorporated into the polymer.

A wide variety of materials may be used as the release agent. One class of useful materials comprises organic materials such as oils and waxes and silicones, and polymeric release coatings such as those made from polytetrafluoroethylenes. Another class of release agents that is especially useful comprises fluorochemical benzotriazoles. These materials not only have been found to chemically bond to metal and metalloid surfaces, they also provide, for example, release and/or corrosion inhibiting characteristics to those surfaces. These compounds are characterized as having a head group that can bond to a metallic or metalloid surface (such as a tool) and a tail portion that is suitably different in polarity and/or functionality from a material to be released. These compounds form durable, self-assembled films that are monolayers or substantially monolayers. The fluorochemical benzotriazoles include those having the formula:

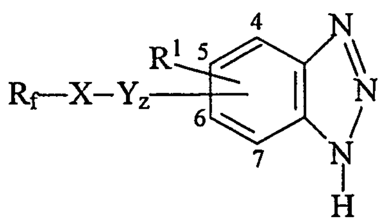

wherein $R_f$ is $C_n F_{2n+1}$ $-(CH_2)_m-$, wherein n is an integer from 1 to 22 and m is 0, or an integer from 1 to 6; X is $-CO_2-$, $-SO_3-$, -CONH-, -O-, -S-, a covalent bond, $-SO_2NR-$, or -NR-, wherein R is H or $C_1$ to $C_5$ alkylene; Y is $-CH_2-$ wherein z is 0 or 1; and R' is H, lower alkyl or $R_f$-X-$Y_z$- with the provisos that when X is -S-, or -O-, m is 0, and z is 0, n is ≥ 7 and when X is a covalent bond, m or z is at least 1. Preferably n + m is equal to an integer from 8 to 20.

A particularly useful class of fluorochemical benzotriazole compositions for use as release agents comprising one or more compounds having the formula:

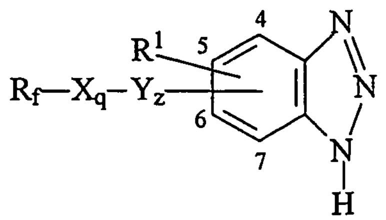

wherein $R_f$ is $C_n F_{2n+1}$ $-(CH_2)_m-$, wherein n is 1 to 22, m is 0 or an integer from 1 to 6; X is $-CO_2-$, $-SO_3-$, -S-, -O-, -CONH-, a covalent bond, $-SO_2NR-$, or -NR-, wherein R is H or $C_1$ to $C_5$ alkylene, and q is 0 or 1; Y is $C_1$ - $C_4$ alkylene, and z is 0 or 1; and R' is H, lower alkyl, or $R_f$-X-$Y_z$. Fluorochemical benzotriazotes are described, for example, in U. S. Patent No. 6,376,065.

The process may optionally include a preconditioning step prior to stretching such as providing an oven or other apparatus. The preconditioning step may include a preheating zone and a heat soak zone. The stretch ratios may also be reduced from its maximum to control shrinkage. This is known in the art as "toe in".

The process may also include a post conditioning step. For example, the film may be first heat set and subsequently quenched.

Uniaxial stretching can occur in a conventional tenter or in a length orienter. A general discussion of film processing techniques can be found in "Film Processing", edited by Toshitaka Kanai and Gregory Campbell, 1999, Chapters 1, 2, 3, and 6. See also "The Science and Technology of Polymer Films," edited by Orville J. Sweeting, 1968, Vol. 1, pages 365-391 and 471-429. Uniaxial stretching can also be achieved in a variety of batch devices such as between the jaws of a tensile tester.

Uniaxial stretching processes include, but are not limited to, conventional "length orientation" between rollers rotating at different speeds, conventional cross-web stretching in a tenter, stretching in a parabolic-path tenter such as that disclosed in WO WO2002/096622 A1, and stretching between the jaws of a tensile tester.

For an ideal elastic material, uniaxial orientation will result if two of three mutually orthogonal stretch ratios are identical. For a material which undergoes no significant change in density upon stretching, each of the two substantially identical stretch ratios will be substantially equal to the square root of the reciprocal of the third orthogonal stretch ratio.

Films stretched in a conventional tenter, although uniaxially oriented, are not truly uniaxially oriented even though they have been uniaxially stretched, because the film is not free to contract along the axis of the direction of travel through the tenter, but is free to contract in the thickness direction. Films stretched in parabolic-path tenters, such as those disclosed in W02002/096622 A1, are both uniaxially stretched and truly uniaxially oriented, because the parabolic path allows for an appropriate amount of contraction of the film along the axis of travel through the tenter. Processes other than parabolic-path tentering may also provide true uniaxial orientation, and the concept is not meant to be limited by the process employed.

True uniaxial orientation is also not limited to those processes that stretch film under uniaxial conditions throughout the entire history of the stretch. Preferably, deviation from a uniaxial stretch is maintained within certain tolerances throughout the various portions of the stretching step. However, processes in which deviations from uniaxiality early in a stretching process are compensated for later in the stretching process, and which yield true uniaxiality in the resulting film are also included in the scope of the invention.

Herein, the path traveled by the gripping means of the tenter stretching apparatus which grips a film edge, and hence, the path traced by an edge of the film as it travels through the tenter, is referred to as a boundary trajectory. It is within the present invention to provide a boundary trajectory that is three dimensional and substantially non-planar. The film may be stretched out-of-plane using out-of-plane boundary trajectories, that is, boundary trajectories that do not lie in a single Euclidean plane.

Though it is not required for true uniaxiality, in the parabolic-path tenter process, the film is preferably stretched in plane. It is preferred that straight lines stretched along TD, the principal stretch direction, remain substantially straight after stretching. In conventional tenter processing of films, this is typically not the case, and lines so stretched acquire a substantial curvature or "bow".

The boundary trajectories may be, but do not need to be, symmetrical, forming mirror images through a central plane. This central plane is a plane passing through a vector in the initial direction of film travel and passing through the initial center point between the boundary trajectories, and a vector normal to the surface of the unstretched film being fed to the stretching apparatus.

Like other film stretching processes, parabolic-path tentering benefits from the selection of conditions such that a uniform spatial drawing of the film is maintained throughout the stretching process. Good spatial uniformity of the film may be achieved for many polymeric systems with careful control of the crossweb and downweb thickness distribution

of the unstretched film or web and careful control of the temperature distribution across the web throughout the stretch. Many polymeric systems are particularly sensitive to non-uniformities and will stretch in a non-uniform fashion if caliper and temperature uniformity are inadequate. For example, polypropylenes tend to "line stretch" under uniaxial stretching. Certain polyesters, notably polyethylene naphthalate, are also very sensitive.

Whichever stretching technique is employed, stretching should be done substantially parallel to the first in-plane axis when shape retention of the geometric features is desired. It has been found that the more parallel the stretching is to the first in-plane axis, the better the shape retention that is achieved. Good shape retention can be achieved when the deviation from exactly parallel is no more than 20°. Better shape retention is achieved if the deviation is no more than 10° from exactly parallel. Even better shape retention is achieved if the deviation is no more than 5° from parallel.

The parabolic stretching step also can maintain the deviation from a uniaxial stretch within certain tolerances throughout the various portions of the stretching step. Additionally, these conditions can be maintained while deforming a portion of the film out-of-plane in an initial portion of the stretch, but return the film in-plane during a final portion of the stretch.

In a truly uniaxial transverse stretch maintained throughout the entire history of the stretch, the instantaneous machine direction stretch ratio (MDDR) approximately equals the square root of the reciprocal of the transverse direction stretch ratio (TDDR) as corrected for density changes. As discussed above, the film may be stretched out-of-plane using out-of-plane boundary trajectories, i.e. boundary trajectories that do not lie in a single Euclidean plane. There are innumerable, but nevertheless particular, boundary trajectories meeting relational requirements of this embodiment of the present invention, so that a substantially uniaxial stretch history may be maintained using out-of-plane boundary trajectories.

Following stretching, the film may be heat set and quenched if desired.

Referring now to Figure 7, an unstretched structure surface film 34 has dimensions T, W and L, respectively representing the thickness, width, and length of the film. After the film 34 is stretched by a factor of lambda ($\lambda$), the stretched film 35 has the dimensions T', W', and L' respectively representing the stretched thickness, stretched width, and the stretched length of the film. This stretching imparts uniaxial character to the stretched film 35.

The relationship between the stretch ratios along the first in-plane axis, the second in-plane axis and the third axis is an indication of the fiber symmetry, and hence the uniaxial orientation of the stretched film. In the present invention, the film has a minimum stretch ratio along the first in-plane axis of at least 1.1. Preferably the stretch ratio along the first in-plane axis is at least 1.5. In another embodiment, the stretch ratio is at least 1.7. More preferably it is at least 3. Higher stretch ratios are also useful. For example, a stretch ratio of 3 to 10 or more is useful in the invention.

The stretch ratios along the second in-plane axis and the third axis are typically substantially the same in the present invention. This substantial sameness is most conveniently expressed as the relative ratio of these stretch ratios to one another. If the two stretch ratios are not equal, then the relative ratio is the ratio of the larger stretch ratio along one of these axes to the smaller stretch ratio along the other of the axes. Preferably the relative ratio is less than 1.4. When the two ratios are equal the relative ratio is 1.

In the case of truly uniaxial stretching with a stretch ratio of $\lambda$ along the first in-plane direction, when the process creates substantially the same proportional dimensional changes in the second in-plane axis and in the thickness direction of the film along the third axis, the thickness and the width will have been reduced by the same proportional dimensional changes. In the present case, this may be approximately represented by $KT/\lambda^{0.5}$ and $KW/\lambda^{0.5}$ where K represents a scale factor that accounts for density changes during stretch. In the ideal case, K is 1. When the density decreases during stretching, K is greater than 1. When density increases during stretching, K is less than 1.

In the invention, the ratio of the final thickness T' to initial thickness of the film T may be defined as the NDSR stretch ratio (NDSR). The MDSR may be defined as the length of a portion of the film after stretching divided by the initial length of that portion. For illustrative purposes only, see Y'/Y in Figure 8. The TDSR may be defined as the width of a portion of the film after stretching divided by the initial width of that portion. For illustrative purposes only, see X'/X in Figure 8.

The first in-plane direction may coincide with the MD, e.g., in the case of a length orientation, or TD, e.g., in the case of a parabolic tenter. In another example, sheets rather than a continuous web are fed into a tenter in the so-called batch tentering process. This process is described in U.S. Patent 6,609,795. In this case the first in-plane direction or axis coincides with TD.

The present invention is applicable generally to a number of different structured surface films, materials and processes where a uniaxial characteristic is desired. The process of the present invention is believed to be particularly suited to fabrication of polymeric films having a microstructured surface where the visco-elastic characteristics of materials used in the film are exploited to control the amount, if any, of molecular orientation induced in the materials when the film is stretched during processing. The improvements include one or more of improved optical performance, enhanced dimensional stability, better processability and the like.

In general, polymers used in the present invention may be crystalline, semi-crystalline, liquid crystalline or

amorphous polymers or copolymers. It should be understood that in the polymer art it is generally recognized that polymers are typically not entirely crystalline, and therefore in the context of the present invention, crystalline or semi-crystalline polymers refer to those polymers that are not amorphous and includes any of those materials commonly referred to as crystalline, partially crystalline, semi-crystalline, etc. Liquid crystalline polymers, sometimes also referred to as rigid-rod polymers, are understood in the art to possess some form of long-range ordering which differs from three-dimensional crystalline order.

The present invention contemplates that any polymer either melt-processable or curable into film form may be used. These may include, but are not limited to, homopolymers, copolymers, and oligomers that can be further processed into polymers from the following families: polyesters (e.g., polyalkylene terephthalates (e.g., polyethylene terephthalate, polybutylene terephthalate, and poly-1,4-cyclohexanedimethylene terephthalate), polyethylene bibenzoate, polyalkylene naphthalates (e.g. polyethylene naphthalate (PEN) and isomers thereof (e.g., 2,6-, 1,4-, 1,5-, 2,7-, and 2,3-PEN)) and polybutylene naphthalate (PBN) and isomers thereof), and liquid crystalline polyesters); polyarylates; polycarbonates (e.g., the polycarbonate of bisphenol A); polyamides (e.g. polyamide 6, polyamide 11, polyamide 12, polyamide 46, polyamide 66, polyamide 69, polyamide 610, and polyamide 612, aromatic polyamides and polyphthalamides); polyether-amides; polyamide-imides; polyimides (e.g., thermoplastic polyimides and polyacrylic imides); polyetherimides; polyolefins or polyalkylene polymers (e.g., polyethylenes, polypropylenes, polybutylenes, polyisobutylene, and poly(4-methyl) pentene); ionomers such as Surlyn™ (available from E. I. du Pont de Nemours & Co., Wilmington, Del.); polyvinylacetate; polyvinyl alcohol and ethylene-vinyl alcohol copolymers; polymethacrylates (e.g., polyisobutyl methacrylate, polypropylinethacrylate, polyethylmethacrylate, and polymethylmethacrylate); polyacrylates (e.g., polymethyl acrylate, polyethyl acrylate, and polybutyl acrylate); polyacrylonitrile; fluoropolymers (e.g., perfluoroalkoxy resins, polytetrafluoroethylene, polytrifluoroethylene, fluorinated ethylene-propylene copolymers, polyvinylidene fluoride, polyvinyl fluoride, polychlorotrifluoroethylene, polyethylene-co-trifluoroethylene, poly (ethylene-alt-chlorotrifluoroethylene), and THV ™ (3M Co.)); chlorinated polymers (e.g., polyvinylidene chloride and polyvinylchloride); polyarylether ketones (e.g., polyetheretherketone ("PEEK")); aliphatic polyketones (e.g., the copolymers and terpolymers of ethylene and/or propylene with carbon dioxide); polystyrenes of any tacticity (e.g., atactic polystyrene, isotactic polystyrene and syndiotactic polystyrene) and ring- or chain-substituted polystyrenes of any tacticity (e.g., syndiotactic poly-alpha-methyl styrene, and syndiotactic polydichlorostyrene); copolymers and blends of any of these styrenics (e.g., styrene-butadiene copolymers, styrene-acrylonitrile copolymers, and acrylonitrile-butadiene-styrene terpolymers); vinyl naphthalenes; polyethers (e.g., polyphenylene oxide, poly(dimethylphenylene oxide), polyethylene oxide and polyoxymethylene); cellulosics (e.g., ethyl cellulose, cellulose acetate, cellulose propionate, cellulose acetate butyrate, and cellulose nitrate); sulfur- containing polymers (e.g., polyphenylene sulfide, polysulfones, polyarylsulfones, and polyethersulfones); silicone resins; epoxy resins; elastomers (e.g., polybutadiene, polyisoprene, and neoprene), and polyurethanes. Blends or alloys of two or more polymers or copolymers may also be used.

In some embodiments a semicrystalline thermoplastic may be used. One example of a semicrystalline thermoplastic is a semicrystalline polyester. Examples of semicrystalline polyesters include polyethylene terephthalate or polyethylene naphthalate. Polymers comprising polyethylene terephthalate or polyethylene naphthalate are found to have many desirable properties in the present invention.

Suitable monomers and comonomers for use in polyesters may be of the diol or dicarboxylic acid or ester type. Dicarboxylic acid comonomers include but are not limited to terephthalic acid, isophthalic acid, phthalic acid, all isomeric naphthalenedicarboxylic acids (2,6-, 1,2-, 1,3-, 1,4-, 1,5-, 1,6-, 1,7-, 1,8-, 2,3-, 2,4-, 2,5-, 2,8-), bibenzoic acids such as 4,4'-biphenyl dicarboxylic acid and its isomers, trans-4,4'-stilbene dicarboxylic acid and its isomers, 4,4'-diphenyl ether dicarboxylic acid and its isomers, 4,4'-diphenylsulfone dicarboxylic acid and its isomers, 4,4'-benzophenone dicarboxylic acid and its isomers, halogenated aromatic dicarboxylic acids such as 2-chloroterephthalic acid and 2,5-dichloroterephthalic acid, other substituted aromatic dicarboxylic acids such as tertiary butyl isophthalic acid and sodium sulfonated isophthalic acid, cycloalkane dicarboxylic acids such as 1,4-cyclohexanedicarboxylic acid and its isomers and 2,6-decahydronaphthalene dicarboxylic acid and its isomers, bi- or multi-cyclic dicarboxylic acids (such as the various isomeric norbomane and norbornene dicarboxylic acids, adamantane dicarboxylic acids, and bicyclo-octane dicarboxylic acids), alkane dicarboxylic acids (such as sebacic acid, adipic acid, oxalic acid, malonic acid, succinic acid, glutaric acid, azelaic acid, and dodecane dicarboxylic acid.), and any of the isomeric dicarboxylic acids of the fused-ring aromatic hydrocarbons (such as indene, anthracene, pheneanthrene, benzonaphthene, fluorene and the like). Other aliphatic, aromatic, cycloalkane or cycloalkene dicarboxylic acids may be used. Alternatively, esters of any of these dicarboxylic acid monomers, such as dimethyl terephthalate, may be used in place of or in combination with the dicarboxylic acids themselves.

Suitable diol comonomers include but are not limited to linear or branched alkane diols or glycols (such as ethylene glycol, propanediols such as trimethylene glycol, butanediols such as tetramethylene glycol, pentanediols such as neopentyl glycol, hexanediols, 2,2,4-trimethyl-1,3-pentanediol and higher diols), ether glycols (such as diethylene glycol, triethylene glycol, and polyethylene glycol), chain-ester diols such as 3-hydroxy-2,2-dimethylpropyl-3-hydroxy-2,2-dimethylpropyl-3-hydroxy-2,2-di methyl propanoate, cycloalkane glycols such as 1,4-cyclohexanedimethanol and

its isomers and 1,4-cyclohexanediol and its isomers, bi- or multicyclic diols (such as the various isomeric tricyclodecane dimethanols, norbomane dimethanols, norbornene dimethanols, and bicyclo-octane dimethanols), aromatic glycols (such as 1,4-benzenedimethanol and its isomers, 1,4-benzenediol and its isomers, bisphenols such as bisphenol A, 2,2'-dihydroxy biphenyl and its isomers, 4,4'-dihydroxymethyl biphenyl and its isomers, and 1,3-bis(2-hydroxyethoxy)benzene and its isomers), and lower alkyl ethers or diethers of these diols, such as dimethyl or diethyl diols. Other aliphatic, aromatic, cycloalkyl and cycloalkenyl diols may be used.

Tri- or polyfunctional comonomers, which can serve to impart a branched structure to the polyester molecules, can also be used. They may be of either the carboxylic acid, ester, hydroxy or ether types. Examples include, but are not limited to, trimellitic acid and its esters, trimethylol propane, and pentaerythritol.

Also suitable as comonomers are monomers of mixed functionality, including hydroxycarboxylic acids such as parahydroxybenzoic acid and 6-hydroxy-2-naphthalenecarboxylic acid, and their isomers, and tri- or polyfunctional comonomers of mixed functionality such as 5-hydroxyisophthalic acid and the like.

Suitable polyester copolymers include copolymers of PEN (e.g., copolymers of 2,6-, 1,4-, 1,5-, 2,7-, and/or 2,3-naphthalene dicarboxylic acid, or esters thereof, with (a) terephthalic acid, or esters thereof; (b) isophthalic acid, or esters thereof; (c) phthalic acid, or esters thereof; (d) alkane glycols; (e) cycloalkane glycols (e.g., cyclohexane dimethanol diol); (f) alkane dicarboxylic acids; and/or (g) cycloalkane dicarboxylic acids (e.g., cyclohexane dicarboxylic acid)), and copolymers of polyalkylene terephthalates (copolymers of terephthalic acid, or esters thereof, with (a) naphthalene dicarboxylic acid, or esters thereof; (b) isophthalic acid, or esters thereof; (c) phthalic acid, or esters thereof; (d) alkane glycols; (e) cycloalkane glycols (e.g., cyclohexane dimethane diol); (f) alkane dicarboxylic acids; and/or (g) cycloalkane dicarboxylic acids (e.g., cyclohexane dicarboxylic acid)). The copolyesters described may also be a blend of pellets where at least one component is a polymer based on one polyester and other component or components are other polyesters or polycarbonates, either homopolymers or copolymers.

The film may also contain a disperse phase comprising polymeric particles in a continuous polymeric matrix or a bi-continuous matrix of phases. In an alternative embodiment, the disperse phase may be present in one or more of the layers of a multilayer film. The level of polymeric particles used is not critical to the present invention and is selected so as to achieve the purposes for which the final article is intended. Factors which may affect the level and type of the polymer particles include the aspect ratio of the particles, the dimensional alignment of the particles in the matrix, the volume fraction of the particles, the thickness of the structured surface film, etc. Typically, the polymer particles are chosen from the same polymers described above.

## Structured Films for Use in Displays

Embodiments consistent with the present invention include combinations of substantially truly uniaxial multilayer optical films with microstructures uniaxed in the same direction. The films can comprise or be used with reflective polarizers and cholesteric reflective polarizers. The films can be stretched or non-stretched with linear microstructured features, non-linear microstructured features, and engineered features, and they can include anything with a total internal reflection (TIR) angle. The films can be biaxed, equally or unequally, and simultaneously or sequentially. Also, they can be arranged at any particular angular with respect to their orientations.

The following Table A provides possible applications of land material and structured surface when multiple films are used together. In the combinations provided in Table A, diffusers could be added, in general, to any of the film stacks to provide certain viewing characteristics. The films may be laminated, separate or partially laminated. All the combinations may substitute any other reflective polarizer. All the combinations can be used in an information display in conjunction with the backlight and film stack, and can be used in an information display in conjunction with the backlight and film stack and a reflective polarizer which is laminated to the rear of the information display. The diffuser, turning film, and BEF in the combinations can be birefringent or isotropic. The term "reflective polarizer" means a substantially truly uniaxial reflective polarizer, "BEF" means brightness enhancement film, and "TF" means turning film.

| Table A. Combinations of films for use in a display as a backlight with (in order from backlight toward viewer, left to right in the rows). | |
|---|---|
| 1 | reflective polarizer + birefringent BEF |
| 2 | reflective polarizer + birefringent BEF + orthogonal birefringent BEF |
| 3 | reflective polarizer + non-birefringent BEF + orthogonal birefringent BEF |

(continued)

| Table A. Combinations of films for use in a display as a backlight with (in order from backlight toward viewer, left to right in the rows). | |
|---|---|
| 4 | reflective polarizer + birefringent BEF + orthogonal non-birefringent BEF (this series has combinations of BEF above the reflective polarizer, some in which the BEF is birefringent and some in which the BEF is non-birefringent) |
| 5 | birefringent BEF + reflective polarizer |
| 6 | birefringent BEF + birefringent BEF + reflective polarizer |
| 7 | birefringent BEF + reflective polarizer + birefringent BEF |
| 8 | birefringent BEF + non-birefringent BEF + reflective polarizer |
| 9 | birefringent BEF + reflective polarizer + non-birefringent BEF |
| 10 | non-birefringent BEF + birefringent BEF + reflective polarizer |
| 11 | non-birefringent BEF + reflective polarizer + birefringent BEF (this series has combinations of BEF below or on both sides of the reflective polarizer, some in which the BEF is birefringent and some in which the BEF is non-birefringent) |
| 12 | birefringent diffuser + reflective polarizer |
| 13 | birefringent diffuser + birefringent diffuser + reflective polarizer |
| 14 | birefringent diffuser + birefringent diffuser + birefringent diffuser + reflective polarizer |
| 15 | birefringent diffuser + reflective polarizer |
| 16 | birefringent diffuser + non-birefringent diffuser + reflective polarizer |
| 17 | birefringent diffuser + non-birefringent diffuser + non-birefringent diffuser + reflective polarizer |
| 18 | non-birefringent diffuser + birefringent diffuser + reflective polarizer |
| 19 | birefringent diffuser + birefringent diffuser + non-birefringent diffuser + reflective polarizer |
| 20 | non-birefringent diffuser + birefringent diffuser + non-birefringent diffuser + reflective polarizer |
| 21 | non-birefringent diffuser + birefringent diffuser + birefringent diffuser + reflective polarizer (this series has combinations of diffuser below or on both sides of the reflective polarizer, some in which the diffuser is birefringent and some in which the BEF is non-birefringent) |
| 22 | the birefringent diffuser series with all combinations of reflective polarizer location within the stack such as: birefringent diffuser + reflective polarizer + non-birefringent diffuser + non-birefringent diffuser |

(continued)

| Table A. Combinations of films for use in a display as a backlight with (in order from backlight toward viewer, left to right in the rows). | |
|---|---|
| 23 | birefringent TF + reflective polarizer |
| 24 | non-birefringent TF + reflective polarizer |
| 25 | reflective polarizer + birefringent TF |
| 26 | reflective polarizer + non-birefringent TF |
| 27 | birefringent TF + reflective polarizer + diffuser |
| 28 | non-birefringent TF + reflective polarizer + diffuser |
| 29 | reflective polarizer + birefringent TF + diffuser |
| 30 | reflective polarizer + non-birefringent TF + diffuser |
| 31 | birefringent TF + diffuser + reflective polarizer |
| 32 | non-birefringent TF + diffuser + reflective polarizer |
| 33 | reflective polarizer + diffuser + birefringent TF |
| 34 | reflective polarizer + diffuser + non-birefringent TF |
| 35 | reflective polarizer with specialized coatings (anti-stat, hardcoat, diffuse, etc.) |
| 36 | reflective polarizer with TF laminated to the rear |
| 37 | reflective polarizer with BEF laminated to the rear (at least partially) |
| 38 | reflective polarizer with diffuser laminated to the rear (at least partially) |

The optical control films or film combinations consistent with the present invention may be used in a collection of optical films to form a display system. A display system consistent with the present invention comprises at least one of two particular embodiments. In the first particular embodiment, the display system comprises a micro-structured film or layer in which the structure above the land comprises an optically anisotropic (e.g. birefringent) material. This first embodiment will be hereafter referred to as a birefringent structured film or layer. In the second particular embodiment, the display system comprises a substantially truly uniaxially stretched elongate micro-structure film or layer. The film or layer of either particular embodiment provides at least one optical function to the display system as explained below. Moreover, the film or layer of either particular embodiment may be combined with other layers or films in the various display configurations set forth in the following. In addition, choosing a particular orientation of the extraordinary axis relative to the prism structure for BEF, made in any material that exhibits birefringence, can increase the BEF gain.

In the first particular embodiment, at least one of the optical control films or layers is a micro-structured film or layer with anisotropic optical orientation. Optical orientation can be defined by an appropriate optical material quantity such as the dielectric tensor or the principal refractive indices. This orientation may be uniaxial in the sense that two principal indices of refraction (the ordinary index) are equal or substantially equal relative to the difference between them and the refractive index which is different (the so-called extraordinary index). Substantially uniaxial is a relative measure, e.g. as characterized by its relative birefringence. Such orientation may be achieved using drawing in one direction, including methods providing a truly uniaxial manner, when the extraordinary axis lies in the film plane, or by a biaxial drawing process (either sequential or simultaneously accomplished in two in-plane directions, typically orthogonal directions) when the extraordinary axis lies normal to the film plane. Alternatively, this anisotropic optical orientation may be biaxial in that the three principal indices of refraction are distinctly different from each other, with one maximum, one intermediate and one minimum principal direction, each orthogonal to each other, and one such direction normal to the plane and the other two in the film plane. Such orientation may be achieved using a drawing process in one direction while constraining the orthogonal in-plane direction, biaxial drawing processes in-plane, or by drawing the film in-plane in one direction and drawing in the thickness direction for the second draw. The structures can be formed prior to drawing and initially formed to account for shape distortions during drawing as needed, or the structures can be formed after drawing, e.g. by diamond turning.

In the second particular embodiment, the micro-structured film or layer, at least one of the optical control films or layers is a micro-structured film or layer formed by imparting at least one elongate structure to at least one surface of the film to form the structure and a land region as previously described in its various methods and then stretching the film in the direction of the elongate structure(s) in a nearly truly uniaxial manner as previously described. The resulting material may remain essentially unoriented from an optical standpoint after drawing or may attain an anisotropic orientation as measured by its principal indices of refraction. The material comprising the micro-structured surface region may be inherently positively or negatively birefringent and may or may not exhibit optical anisotropy after drawing as a function of those drawing conditions.

In a particularly useful subset of this second particular embodiment, the precursor layer to a stretched micro-structured layer begins as a co-extruded layer of a multilayer precursor cast web that can itself be subsequently stretched. The precursor layer to the stretched micro-structured layer can be structured in the act of casting the precursor multilayer cast web or this layer may be structured following casting in accord with the various methods previously described to a stretched micro-structured. In some instances, co-extruded layers on either outer sides of a multilayer stack of layers may both be imparted with structure. In a particularly useful example of this subset of embodiments, the multilayer cast web develops into a multilayer optical film, e.g. a reflective polarizer upon stretching. Thus in this case, the structure and multilayer land beneath both develop orientation during stretching. Generally, the ultimately structured layer or layers may comprise a similar material to that found in another layer in the multilayer land or yet another material. In this manner, the multilayer develops at least one birefringent layer or set of layers. In one useful example, the multilayer land comprises an optical stack of layers upon stretching that forms a reflective polarizer with substantially uniaxial orientational character, i.e. the film comprises alternating layers of two or more materials in an optical stack of layers so that at least one material is birefringent with a substantially uniaxially oriented index set and the other materials are likewise oriented or unoriented. Typically, the film comprises two materials in the optical stack: a first material substantially uniaxially oriented with its extraordinary axis in-plane, and second material substantially unoriented with its refractive index chosen to substantially match the ordinary index of the oriented first material. The outermost, micro-structured layer(s) may remain unoriented or may also assume a uniaxial character under draw depending on the material of each outer layer and process conditions.

A variety of material characteristics may impact the most suitable choices for a given application or optical function for structured films or layers consistent with the present invention. In brightness enhancement applications, the ability to form sharp prismatic apexes will improve the gain characteristics of the resulting film or layer. Gain is the ratio of the luminance of a backlight or backlight-display combination with a subject film to the ratio of the same backlight or backlight-display combination without the same subject film. For example, for a backlight-display combination and reflective polarizer with luminance 150 units and the same backlight-display combination without reflective polarizer with luminance 100 units, the reflective polarizer is said to have a gain of 1.50 (= 150/100).

The brittleness or fracture behavior will impact the result of diamond turning methods. The flow and release characteristics will impact the sharpness of peaks in cast replication using a structured tool, or with embossing methods. High clarity or low haze in the construction will also improve the gain or brightness enhancement. Finally, dispersion can impact color and other performance. In some applications, lower dispersion (e.g., refractive index variation across the optical spectrum) can improve the overall performance.

Process conditions and treatments may be chosen in accord with regard to the development of the desired level of optical anisotropy, optical clarity and mechanical properties. For those embodiments truly uniaxially stretched, a post stretching heat treatment may be applied to the film as outlined in the companion United States Provisional Patent Application Serial No. 60/669865, entitled "Heat Setting Optical Films", and filed on April 8, 2005. The level of heat setting allowed for a given application will in some cases be limited by the level of optical clarity required.

Film(s) or layer(s) of either particular embodiment, e.g. comprising a birefringent structured surface or comprising a substantially truly uniaxially oriented structured surface, may be used in a variety of display and projection applications, including hand-held, instrumentation, monitoring, computer and/or TV applications. One class of such applications comprises, in the following order, a backlight sub-assembly, a collection of one or more optical control films and/or one or more optical control layers, and a display sub-assembly. Viewing of the display is made on the front side opposite the backlight over some preferred subtended solid angle or preferred solid angle space. The backlight sub-assembly can be configured in a variety of methods, with a variety of elements. For example, the light source can be a bulb or an array of bulbs directly behind the films and display sub-assembly. In an alternative example, the light source can be located along an edge and the light guided behind the film collection and display sub-assembly using a variety of means including a light guiding wedge that distributes the light intensity (i.e. an obliquely illuminated backlight). A back reflector can be included to enhance or control the reflection of the light from the source or sources as well as from light recycled via reflection, e.g. by a brightness enhancement film. The display sub-assembly can be also configured in a variety of methods. A typical component of the display sub-assembly is an array of pixels comprising liquid crystals, e.g. a liquid crystal display panel. Additional layers can be coupled to this liquid display panel including polarizing layers in the front and or back, anti-glare layers and the like.

The collection of optical control films between the backlight and the display subassemblies may provide a

variety of optical functions. One such function is light turning for obliquely illuminated backlights (e.g. as provided by turning films or turning layers). Another such function is brightness enhancement of at least one polarization state at a defined viewing angle, e.g. at normal incidence or over a defined cone angle, or elliptical cone angles (e.g. horizontal and vertical) or more general solid angle viewing space. For example, brightness enhancement films using prismatic structures such as BEF available from 3M Optical Systems Division St. Paul, MN, can provide a so-called "cat's eye" pattern of increased brightness in solid angle viewing space. Another related optical control function is polarization state selectivity or contrast between polarization states transmitted through the collection of optical control films to the display sub-assembly. One method to this optical control function is the control of reflectivity either bulk or surface, at, among, and between the various surfaces of the films and layers of the collection of optical control film, films and/or layer or layers. For example, various forms of index matching between layers or anti-reflection or reflection enhancing layers may be considered. BEF film as just described uses prisms with designed angles that cause total internal reflection over a wide range of incident angles. A class of optical control films that both selectively reflects one state of polarization while selectively transmitting an orthogonal state of polarization are the reflective polarizers. These can include wire-grid, liquid crystalline-based, polymer blend and multilayer reflective polarizers as further described later. Reflective polarizers are particularly capable in combining the optical functions of brightness enhancement and polarization selectivity. Another related optical control function can be achieved by retarder films (such as quarter-wave and half-wave plates) or more general compensation films or layers that alter the characterization of the transmitted polarization states, e.g. by phase control for normally transmitted light (e.g. retarders) or by a more complicated control scheme also considering the off-normal transmission phase characteristics, and also with regard to the various aspects of the transmitted light frequencies (e.g. wavelength, dispersion, intensity distribution or power spectrum and the like). Such compensation films include but are not limited to so-called positive or negative a-plate and c-plates, but also include films in which the thickness index is intermediate between the two principal in-plane directions. Yet another related optical control function is the absorption characteristics with wavelength and polarization state of the collection of optical control film, films and/or layer or layers, e.g. including polarization selectivity using absorbing polarizers, e.g. based on linear or circular dichroism. These are often used as final polarizing elements at or in the display sub-assembly. Another optical control function which is coupled to these is the ultimate blocking power of ultra-violet or infra-red light not desired in the transmitted light, e.g. for radiative or thermal control, e.g. to provide lifetime or dimensional stability to the various components receiving the transmitted light either further in the collection or in the subsequent display sub-assembly. In general, the collection of optical control films modify the various optical characteristics of the initial backlight, e.g. the Stokes parameters or the Jones vector (e.g., Brousseau, Fundamentals of Polarized Light by John Wiley and Sons) across the power spectrum of interest, e.g. in the optical, ultra-violet and infra-red spectrums, and across the solid angle space of propagation, (e.g. the viewing hemisphere for a flat panel display), both through the transmissive characteristics of the collection and the reflective and coupled recycling behavior of the joint system of the collection and the backlight sub-assembly.

Reflective polarizers particularly useful for inclusion in the collection of optical control films, are now further exemplified. For example, the DBEF product available from 3M Optical Systems Division St. Paul, MN, is a multilayer reflective polarizing film that for normally transmitted light, substantially blocks the light in one linear state of polarization while substantially transmitting the light in the orthogonal state of linear polarization. The degree and nature of the polarization selectivity can vary in these films as the transmitted light propagates off-angle from the film normal, e.g. as a function of two polar coordinates and with the various wavelengths of the transmitted light. Another reflective polarizing film is a diffuse-reflective polarizing film (DRPF) comprising a continuous/disperse or bicontinuous blend. One particularly useful multilayer reflective polarizer has substantially uniaxial orientational character, i.e. the film comprises alternating layers of two or more materials in an optical stack of layers so that at least one material is birefringent with a substantially uniaxially oriented index set and the other materials are likewise oriented or unoriented. Typically, the film comprises two materials in the optical stack: a first material substantially uniaxially oriented with its extraordinary axis in-plane, and second material substantially unoriented with its refractive index chosen to substantially match the ordinary index of the oriented first material. Another particularly useful reflective polarizer comprises a continuous/disperse or bicontinuous blend with at least one continuous phase possessing a substantially uniaxially oriented refractive index set. Still another reflective polarizing film can be liquid crystalline based, e.g. the PCF (Polarization Conversion Film) product as available from Nitto-Denko of Japan which uses a cholesteric liquid crystal.

Each or any group of the films in the collection of one or more optical control films may be directly connected, loosely, e.g. by pinning or constraining within a frame or other holding assembly or more intimately contacted to each other, e.g. by lamination, adhesive coatings, co-extrusion and formation, etc, or mounted on mechanical supports or supporting plates, e.g. a glass plate. Intimate contacting (e.g. so that any residual air gap between layers is less than a quarter-wave of light of interest) can be particularly useful in suppressing unwanted reflections between surfaces. Index matching, e.g. for material axes along the pass state direction of vibration or linear polarization, across films or layers intimately contacted can further suppress undesirable reflection of the desired, transmitted state of polarization. The outer layers of the collection may also be connected either loosely or intimately to the backlight and display assemblies.

When the birefringent or substantially truly uniaxially stretched structured film or layer is placed into a collection of optical control films in a display system so that the structure faces towards the backlight, the structured element can provide a turning function. Turning films change the direction of light from a backlight such that it is transmitted out of a display for viewing by a user. In a turning film, the spread of incident angles that result in polarized light may be increased by widening the difference between the indices of refraction in the plane of incidence and perpendicular to the plane of incidence. A turning film embedded in a polymer lightguide may be a useful construction to fabricate a polarized backlight. The preferred construction matches the refractive index in the plane of incidence with the isotropic refractive index of the lightguide.

When the birefringent or substantially truly uniaxially stretched structured film or layer is placed into a collection of optical control films in a display system so that the structure faces away from the backlight, the structured element can provide a brightness enhancement function. The structures can include microreplicated prisms or other features. In a further example, the structured film or layer is combined with another in a crossed BEF configuration. In such a combination, a particular structured film or layer of this present invention may be combined with itself or with any other such embodiment of this present invention or with an isotropic film or layer, e.g. BEF available from 3M Company, St. Paul , MN. The elongate structures may be crossed in any relative orientation with respect to each other.

Film(s) or layer(s) of either particular embodiment, e.g. comprising a birefringent structured surface or comprising a substantially truly uniaxially oriented structured surface, used as either a turning film or a brightness enhancement film, may be combined with any other films or layers providing the various optical functions already described. Particularly useful combinations can result with reflective polarizers, e.g. as previously described. When combining any of these structured layers or films with a reflective polarizer, the angle between the elongate structure of each given film or layer and the pass axis of reflective polarizer can be tuned independently, e.g. the directions can be parallel, perpendicular or at an intermediate angle with respect to any given pair. A structured film or layer providing turning is typically placed closer to the backlight than the reflective polarizer in the collection of optical control films or layers. A structured film or layer providing brightness enhancement can be placed closer to or farther from the backlight than the reflective polarizer in the collection of optical control films or layers. In some cases, issues like dispersion or color non-uniformity may suggest a preferred placement, e.g. closer to the backlight. In the case of two or more such structured films or layers, each may be closer to or farther from the backlight than the reflective polarizer, or the reflective polarizer may be intermediate between them. Finally, the intimate contacting of an unstructured backside of the structured film or layer to the reflective polarizer may be useful for reducing reflection and brightness enhancement losses (gain losses) of the desired state of polarization. In this connection, the index matching of the material axes along this state of vibration or polarization is useful. Another particular advantage of a combination of a substantially uniaxially oriented or a substantially truly uniaxially stretched structured surface with a likewise formed or oriented reflective polarizer of the multilayer or continuous phase blend types is the ability to match the effective pass indices for light incident off-normal. In many configuration instances, this would be anticipated to provide a more sustained brightness enhancement or gain at an off-normal viewing angle.

A sub-class of applications for the films described above include transreflective displays, which include a weak mirror-like film that transmits and reflects both polarization states. Likewise, another sub-class may include reflective display systems not including a backlight but having a film behind or in front of the display sub-assembly.

In the above description, the position of elements has sometimes been described in terms of "first", "second", "third", "top" and "bottom". These terms have been used merely to simplify the description of the various elements of the invention, such as those illustrated in the drawings. They should not be understood to place any limitations on the useful orientation of the elements of the present invention.

Accordingly, the present invention should not be considered limited to the particular examples described above, but rather should be understood to cover all aspects of the invention as fairly set out in the claims. Various modifications, equivalents, as well as numerous structures to which the present invention may be applicable will be readily apparent to those of skill in the art to which the present invention is directed upon review of the present specification. The claims are intended to cover such modifications and devices.

## Examples

### Example 1

We cast films ofXylex 7200 from GE Plastics, Pittsfield, MA, using the belt replication process shown in Figure 6 and described in United States Patent Application Publication No. 2006/002141 A1. The film was extruded at 550 F and cast onto a belt at a temperature of 285 F. The belt was engraved with a surface pattern similar to that of VIKUITI BEF-II 90/50 and coated with a BTA coating as described in the provisional patent application referenced above. The resulting film was 0.011 inches thick and was truly uniaxially stretched in the groove direction using a batch film stretcher from Brückner. The stretch conditions are shown in Table 1 for selected samples. Gain was measured for combinations

of the oriented, microstructured film with a multilayer, polarizing film stretched in a manner similar to that described in U. S. Patent No. 6,939,499. This polarizing film possessed a gain of 1.71.

Table 1

| Sample I.D. | Film | Draw Ratio | Stretch Temperature (C) | Preheat Time (s) | Gain of structured film | Gain of the stack with grooves parallel to RP pass direction | Gain of the stack with grooves parallel to RP block direction |
|---|---|---|---|---|---|---|---|
| 1A | Non-oriented, micro-structured Xylex | - | - | - | 1.36 | 1.92 | 2.01 |
| 1B | Oriented, micro-structured Xylex | 1x5 | 140 | 100 | 1.51 | 2.13 | 2.23 |
| 1C | Oriented, micro-structured Xylex | 1x5 | 143 | 100 | 1.46 | 2.07 | 2.17 |

**Example 2**

The cast, microstructured film of Example 1 was continuously, truly-uniaxially oriented in the groove direction using a parabolic-path tenter. The preheat and stretch temperatures were 140°C and the film was stretched to a draw ratio of 5:1. Gain was measured at several crossweb and downweb locations on the oriented web. The results are reported in Table 2 and are described relative to a coordinate system where the first coordinate is the crossweb position and the second number is the crossweb position. Gains were also measured for combinations of the oriented, micro-structured films with the same reflective polarizer as used is Example 1.

Table 2

| Sample I.D. | Sample Position (in) | Gain of structured film | Gain of the stack with grooves parallel to RP pass direction | Gain of the stack with grooves parallel to RP block direction |
|---|---|---|---|---|
| 2A | 0.0 | 1.46 | 2.08 | 2.11 |
| 2B | -17,0 | 1.48 | - | 2.21 |
| 2C | +17,0 | 1.48 | - | 2.14 |
| 2D | 0,-6 | 1.47 | 2.10 | 2.15 |
| 2E | -17,-6 | 1.51 | - | 2.22 |
| 2F | +17,-6 | 1.48 | - | 2.16 |

**Example 3**

A roll sample of the oriented, microstructured film from Example 2 was laminated to a roll sample of the reflective polarizer from Example 1 using the optically clear pressure-sensitive adhesive 3M-8142 available from 3M Company, Maplewood, MN. The groove direction of the oriented microstructured film was parallel with the block direction of the RP film. The gain for the combined film, as measured in the center of the web, was 2.18.

**Example 4**

Syndiotactic polystyrene (sPS) available under the trade name Questra from the Dow Chemical Co., Midland, MI, was cast into a flat film using a 3-roll stack. The resin was extruded at 580 F onto a smooth cast roll set at 140 F. A pattern similar to the VIKUITI BEF-II 90/50 pattern was cut into one surface of the sPS film using a Pneumo lathe from Pneumo Precision Products, Inc. The flat film was mounted on the lathe using tape and vacuum. The cuttings were made along the machine direction of the cast film. These films were then stretched in a truly uniaxial manner using a batch film stretcher from Bruckner. The films were stretched along the groove direction using the stretch conditions in Table 3.

Table 3

| Sample I.D. | Film | Draw Ratio | Stretch Temperature (C) | Preheat Time (s) | Gain of structured film | Gain of the stack with grooves parallel to RP block direction | Gain of the stack with grooves parallel to RP block direction |
|---|---|---|---|---|---|---|---|
| 4A | Non-oriented, micro-structured sPS | - | - | - | 1.51 | 1.94 | 2.19 |
| 4B | Oriented, micro-structured sPS | 1x5 | 128 | 60 | 1.53 | - | 2.28 |
| 4C | Oriented, micro-structured sPS | 1x6 | 129 | 30 | 1.54 | 2.04 | 2.33 |

**Example 5**

Syndiotactic polystyrene (sPS) available under the trade name Questra from the Dow Chemical Co., Midland, MI, was cast into a flat film using a 3-roll stack. The resin was extruded at 580°F onto a smooth cast roll set at 140°F. The cast film was simultaneously, biaxially oriented using a batch film stretcher from Bruckner. The stretch conditions included ratios of 2.1x2, a stretch temperature of 129°C and a preheat time of 30 seconds. Following the batch orientation, a pattern similar to the VIKUITI BEF-II 90/50 pattern was cut into one surface of the sPS film using a Pneumo lathe from Pneumo Precision Products, Inc. The flat film was mounted on the lathe using tape and vacuum. The stretch conditions and the measured gains for the oriented film and combinations of the oriented, microstructured film with the reflective polarizer film described in Example 1 are shown in Table 4.

Table 4

| Sample I.D. | Film | Draw Ratio | Stretch Temperature (C) | Preheat Time (s) | Gain of structured film | Gain of the stack with grooves parallel to RP block direction | Gain of the stack with grooves parallel to RP block direction |
|---|---|---|---|---|---|---|---|
| 5A | Oriented, micro-structured sPS | 2.1x2 | 129 | 30 | 1.56 | 1.93 | 2.21 |

**Example 6**

Polyethylene naphthalate (PEN) was cast into a flat film using a 3-roll stack. The resin was extruded at 550°F onto a smooth cast roll set at 70°F. A pattern similar to the VIKUITI BEF-II 90/50 pattern was cut into one surface of the sPS film using a Pneumo lathe from Pneumo Precision Products, Inc. The flat film was mounted on the lathe using tape and vacuum. The cuttings were made along the machine direction of the cast film. These films were then stretched in a truly uniaxial manner using a batch film stretcher from Bruckner. The films were stretched along the groove direction using the stretch conditions in Table 5.

Table 5

| Sample I.D. | Film | Draw Ratio | Stretch Temperature (C) | Preheat Time (s) | Gain of structured film | Gain of the stack with grooves parallel to RP block direction | Gain of the stack with grooves parallel to RP block direction |
|---|---|---|---|---|---|---|---|
| 6A | Non-oriented, micro-structured PEN | - | - | - | 1.56 | 1.69 | 2.14 |
| 7B | Oriented, micro-structured PEN | 1x5.5 | 156 | 60 | 1.46 | 1.84 | 2.09 |
| 8C | Oriented, micro-structured PEN | 1x5 | 156 | 60 | 1.44 | 1.80 | 2.05 |

**Example 7**

The oriented, microstructured films of Examples 1 and 4 were tested in different configurations with and without the same reflective polarizer film used in the previous examples. The gain results for selected orientations and combinations of films are listed in Table 6. The top film in the stack is always closest to the viewer and the bottom film is furthest from the viewer.

Table 6

| **Sample Film Stack** | | | **Sample Alignment** |
|---|---|---|---|
| **Top** | **Middle** | **Bottom** | |
| Oriented, microstructured Xylex | RP | - | Grooves aligned 0° to RP block direction |
| Oriented, microstructured Xylex | RP | - | Grooves aligned 20° to RP block direction |
| Oriented, microstructured Xylex | RP | - | Grooves aligned 45° to RP block direction |
| Oriented, microstructured Xylex | RP | - | Grooves aligned 70° to RP block direction |
| Oriented, microstructured Xylex | RP | - | Grooves aligned 90° to RP block direction |
| | | | |

(continued)

| Sample Film Stack | | | Sample Alignment |
|---|---|---|---|
| Top | Middle | Bottom | |
| RP | Oriented, microstructured Xylex | - | Grooves aligned 0° to RP block direction |
| RP | Oriented, microstructured Xylex | - | Grooves aligned 20° to RP block direction |
| RP | Oriented, microstructured Xylex | - | Grooves aligned 45° to RP block direction |
| RP | Oriented, microstructured Xylex | - | Grooves aligned 70° to RP block direction |
| RP | Oriented, microstructured Xylex | - | Grooves aligned 90° to RP block direction |
| | | | |
| Oriented, microstructured Xylex | Oriented, microstructured Xylex | - | Top film grooves aligned 90° to bottom film grooves |
| Oriented, microstructured Xylex | Oriented, microstructured Xylex | - | Top film grooves aligned 45° to bottom film grooves |
| Oriented, microstructured Xylex | Oriented, microstructured Xylex | - | Top film grooves aligned 0° to bottom film grooves |
| | | | |
| RP | Oriented, microstructured Xylex | Oriented, microstructured Xylex | Middle film grooves aligned 90° with RP block direction, bottom film grooves aligned 0° with RP block direction |
| RP | Oriented, microstructured Xylex | Oriented, microstructured Xylex | Middle film grooves aligned 0° with RP block direction, bottom film grooves aligned 0° with RP block direction |
| | | | |
| Oriented, microstructured Xylex | Oriented, microstructured sPS | - | Top film grooves aligned 90° to bottom film grooves |
| Oriented, microstructured Xylex | Oriented, microstructured sPS | - | Top film grooves aligned 45° to bottom film grooves |
| Oriented, microstructured Xylex | Oriented, microstructured sPS | - | Top film grooves aligned 0° to bottom film grooves |
| | | | |
| RP | Oriented, microstructured Xylex | Oriented, microstructured sPS | Middle film grooves aligned 90° with RP block direction, bottom film grooves aligned 0° with RP block direction |
| RP | Oriented, microstructured Xylex | Oriented, microstructured sPS | Middle film grooves aligned 0° with RP block direction, bottom film grooves aligned 0° with RP block direction |

### Example 8

A multilayer optical film made according to the procedures as described in examples 1-4 of U.S. Patent Application Publication 2004/0227994 A1 was cast and the protective polypropylene skin layer removed. The low index polymer used was a co-PET.

The multilayer optical film was cut into a sheet and dried in an oven at 60°C for a minimum of 2 hours. The platens were heated to 115°C. The film was stacked in a construction of layers in the order: cardboard sheet, chrome plated brass plates (approx. 3 mm thick), release liner, nickel microstructured tool, multilayer optical film, release liner, chrome plated brass plate (approx. 3mm thick), and cardboard sheet. The construction was placed between the platens and closed. A pressure of $1.38 \times 10^5$ Pa (20 psi) was maintained for 60 seconds.

The structured surface of the nickel microstructured tool comprised a repeating and continuous series of triangular prisms, with a 90° apex angle, basal widths (BW) of 10 microns and a height (P) of about 5 microns. The basal vertices of the individual prisms were shared by their adjoining, neighboring structures.

The embossed sheets were cut to an aspect ratio of 10:7 (along to across the grooves). The structured multilayer optical film was stretched in a nearly truly uniaxial manner along the continuous length direction of the prisms using a batch tenter process. The film was preheated to nearly 100°C, stretched to a stretch ratio around 6 over about 20 seconds, and then the stretching was reduced by about 10% while still in the tenter at stretch temperature, to control shrinkage in the film. The final thickness of the film (T'), including the structured height, was measured to be 150 microns. The indices of refraction were measured on the backside of the stretched film using a Metricon Prism Coupler as available from Metricon, Piscataway, NJ, at a wavelength of 632.8 nm. The indices along the first in-plane (along the prisms), second in-plane (across the prisms) and in the thickness direction were measured to be 1.699, 1.537 and 1.534 respectively. The relative birefringence in the cross-sectional plane of this stretched material was thus 0.018.

## Claims

**1.** A display comprising a backlight and an article comprising as arranged in the following order from the backlight toward a viewer:

a birefringent turning film; and
a reflective polarizer.

**2.** The display according to claim 1, the article further comprising as arranged in the following order from the backlight toward a viewer:

a diffuser, behind the reflective polarizer.

**3.** The display according to claim 1, the article further comprising
a diffuser between the birefringent turning film and the reflective polarizer.

**4.** A method of arranging an article in a display with a backlight, the article comprising as arranged in the following order from the backlight toward a viewer:

a birefringent turning film; and
a reflective polarizer.

**5.** The method according to claim 4, the article further article comprising as arranged in the following order from the backlight toward a viewer:

a diffuser, behind the reflective polarizer.

**6.** The method according to claim 4, the article further article comprising
a diffuser between the birefringen turning film and the reflective polarizer.

## Patentansprüche

**1.** Display aufweisend eine Hintergrundbeleuchtung und einen Gegenstand, der wie in der folgenden Reihenfolge von

der Hintergrundbeleuchtung in Richtung eines Betrachters angeordnet Folgendes aufweist:

einen doppelbrechenden Umkehrfilm; und
einen reflektierenden Polarisator.

2. Display nach Anspruch 1, wobei der Gegenstand ferner wie in der folgenden Reihenfolge von der Hintergrundbeleuchtung in Richtung eines Betrachters angeordnet Folgendes aufweist:

einen Diffusor hinter dem reflektierenden Polarisator.

3. Display nach Anspruch 1, wobei der Gegenstand ferner Folgendes aufweist:

einen Diffusor zwischen dem doppelbrechenden Umkehrfilm und dem reflektierenden Polarisator.

4. Verfahren zum Anordnen eines Gegenstands in einem Display mit einer Hintergrundbeleuchtung, wobei der Gegenstand wie in der folgenden Reihenfolge von der Hintergrundbeleuchtung in Richtung eines Betrachters angeordnet Folgendes aufweist:

einen doppelbrechenden Umkehrfilm; und
einen reflektierenden Polarisator.

5. Verfahren nach Anspruch 4, wobei der Gegenstand ferner wie in der folgenden Reihenfolge von der Hintergrundbeleuchtung in Richtung eines Betrachters angeordnet Folgendes aufweist:

einen Diffusor hinter dem reflektierenden Polarisator.

6. Verfahren nach Anspruch 4, wobei der Gegenstand ferner Folgendes aufweist:

einen Diffusor zwischen dem doppelbrechenden Umkehrfilm und dem reflektierenden Polarisator.

## Revendications

1. Ecran comprenant un rétroéclairage et un article comprenant, tels que disposés dans l’ordre suivant depuis le rétroéclairage vers un téléspectateur :

un film d’orientation biréfringent ; et
un polariseur réfléchissant.

2. Ecran selon la revendication 1, l’article comprenant en outre, tel que disposé dans l’ordre suivant depuis le rétroéclairage vers un téléspectateur :

un diffuseur, derrière le polariseur réfléchissant.

3. Ecran selon la revendication 1, l’article comprenant en outré :

un diffuseur entre le film d’orientation biréfringent et le polariseur réfléchissant.

4. Procédé pour disposer un article dans un écran avec un rétroéclairage, l’article comprenant, tels que disposés dans l’ordre suivant depuis le rétroéclairage vers un téléspectateur :

un film d’orientation biréfringent ; et
un polariseur réfléchissant.

5. Procédé selon la revendication 4, l’article comprenant en outre, tel que disposé dans l’ordre suivant depuis le rétroéclairage vers un téléspectateur :

un diffuseur, derrière le polariseur réfléchissant.

**6.** Procédé selon la revendication 4, l'article comprenant en outré :

un diffuseur entre le film d'orientation biréfringent et le polariseur réfléchissant.

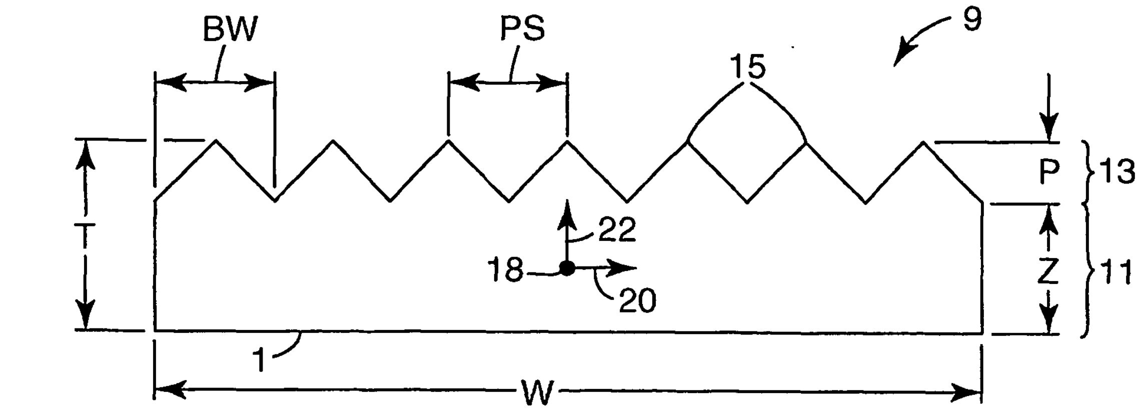


*Fig. 1*

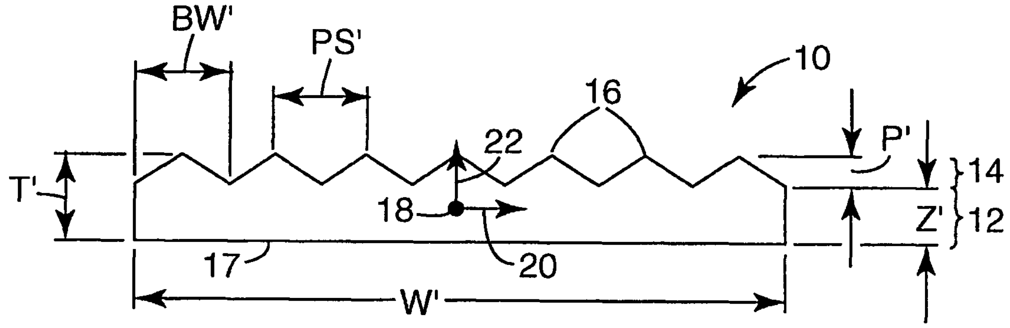


*Fig. 2*

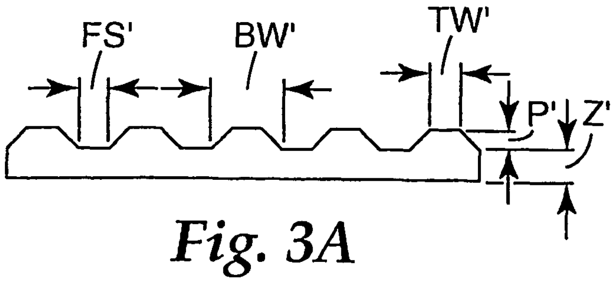


*Fig. 3A*

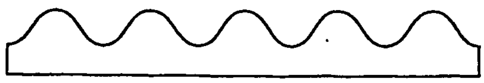

*Fig. 3B*

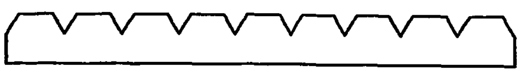

*Fig. 3C*

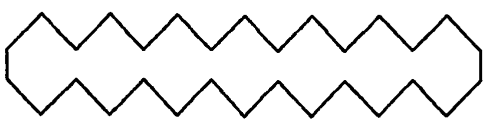

*Fig. 3D*

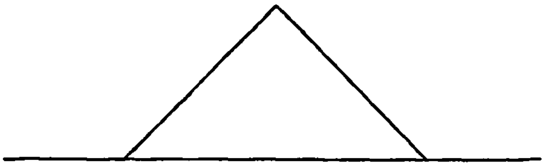
Fig. 4A

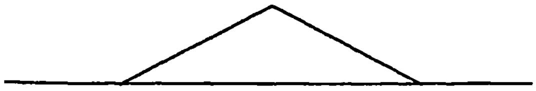
Fig. 4B

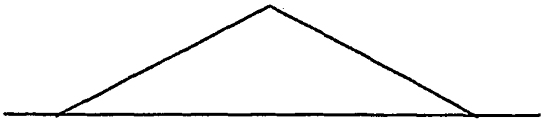
Fig. 4C

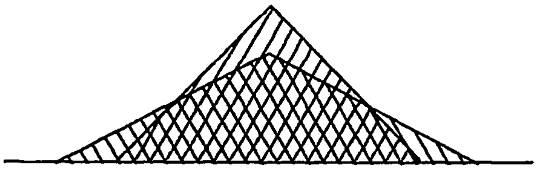
Fig. 4D

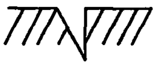
Fig. 5A

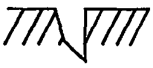
Fig. 5B

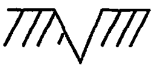
Fig. 5C

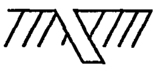
Fig. 5D

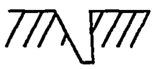
Fig. 5E

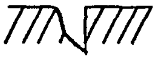
Fig. 5F

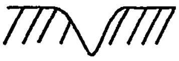
Fig. 5G

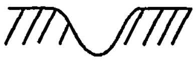
Fig. 5H

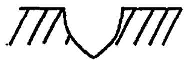
Fig. 5I

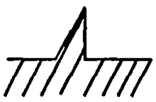
Fig. 5J

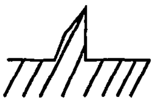
Fig. 5K

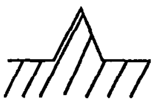
Fig. 5L

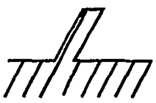
Fig. 5M

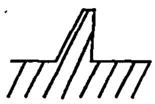
Fig. 5N

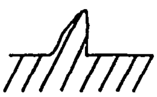
Fig. 5O

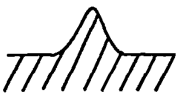
Fig. 5P

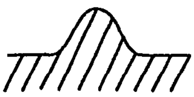
Fig. 5Q

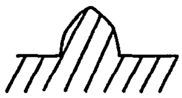
Fig. 5R

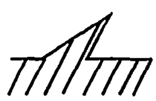
Fig. 5S

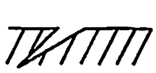
Fig. 5T

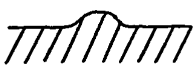
Fig. 5U

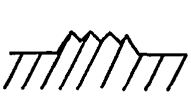
Fig. 5V

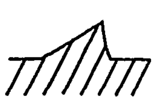
Fig. 5W

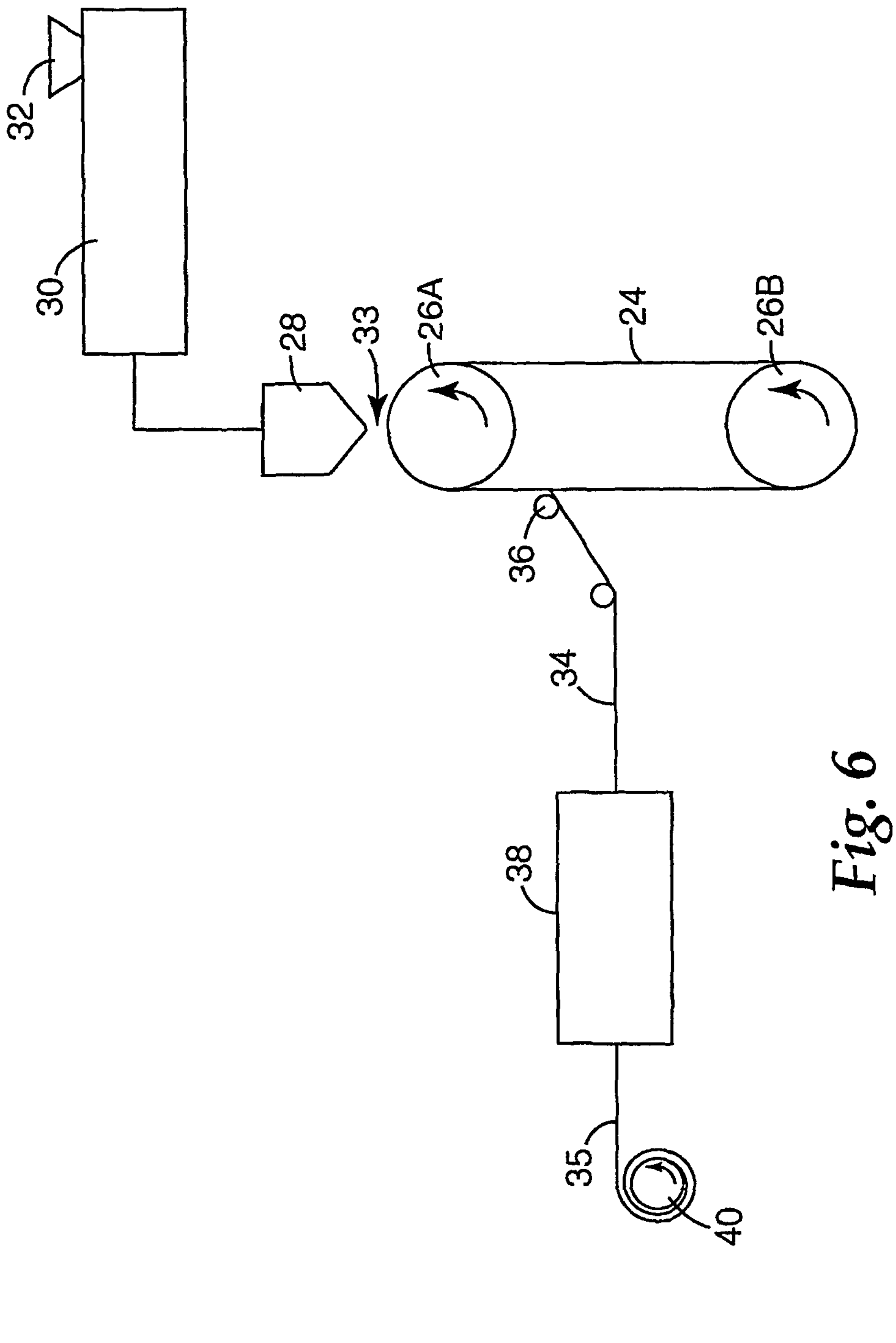


Fig. 6

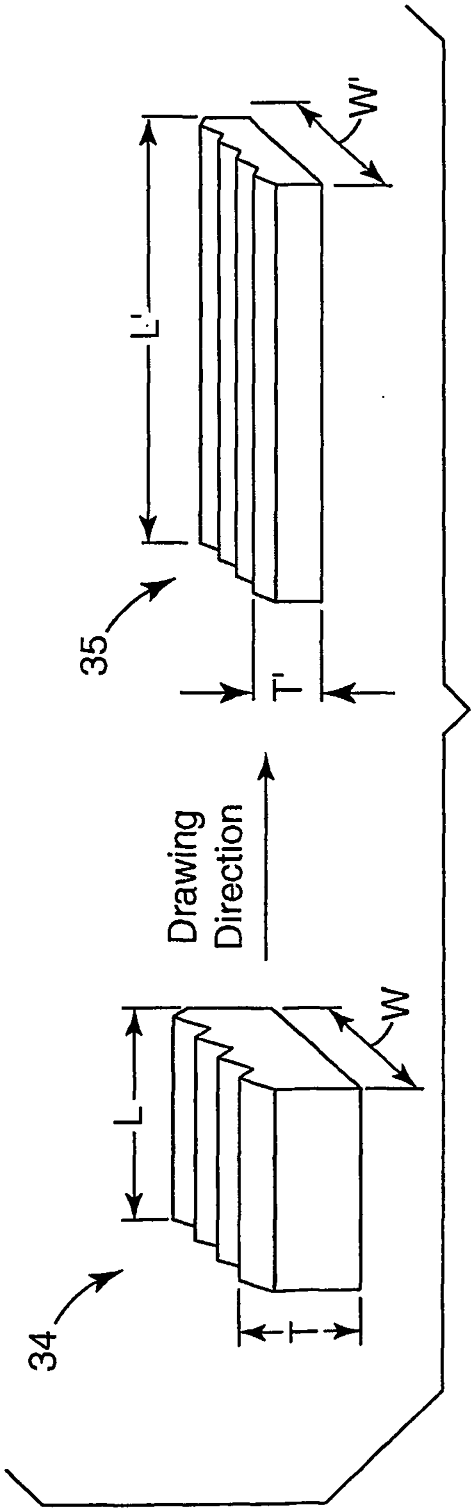


*Fig. 7*

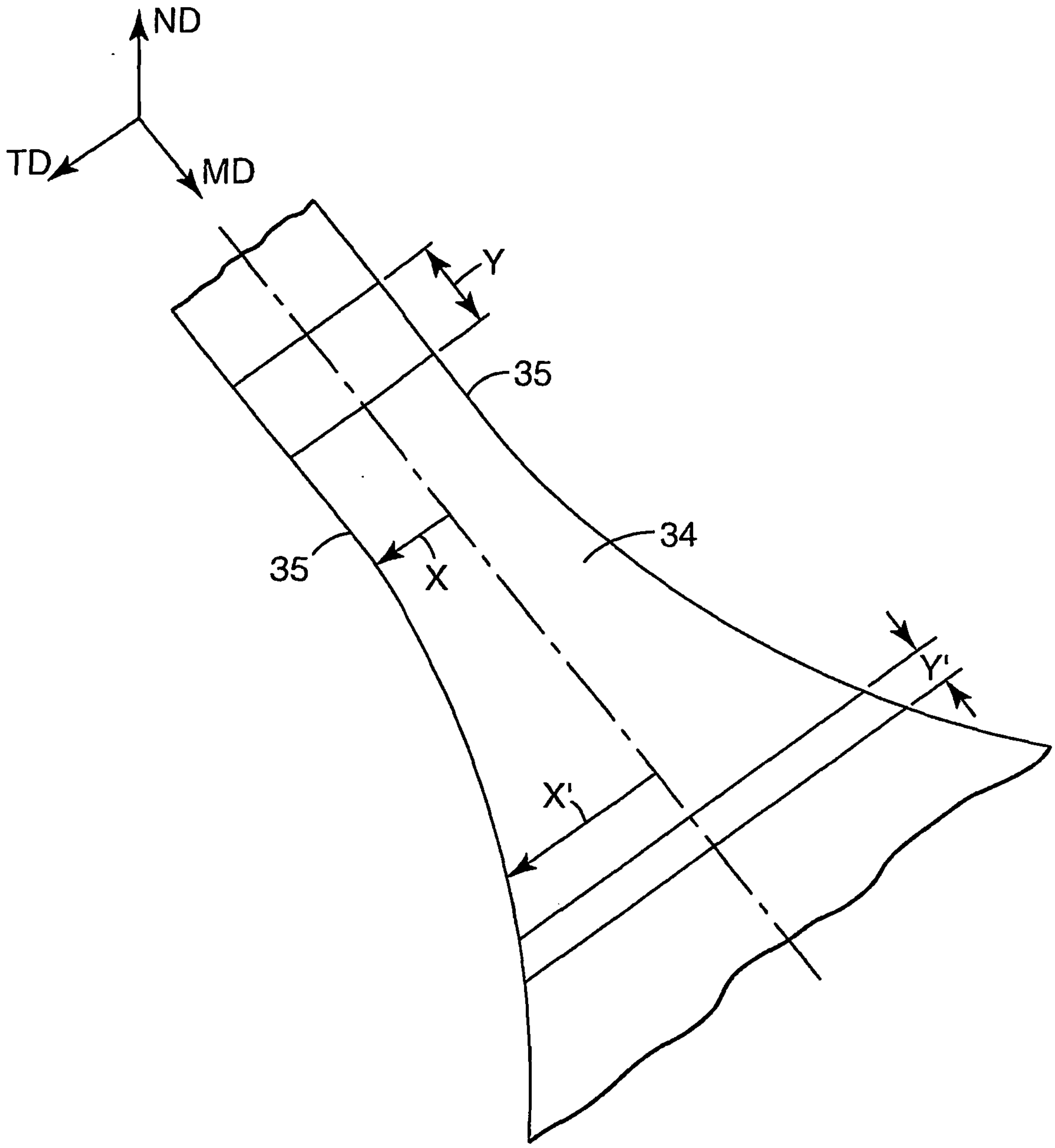


*Fig. 8*

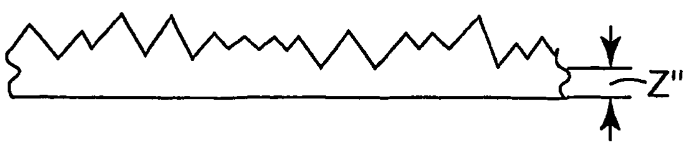


*Fig. 9*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6096247 A
- US 6808658 A
- US 20020154406 A1
- US 20040005451 A1
- US 3213753 A
- US 4446305 A
- US 4520189 A
- US 4521588 A
- US 4525413 A
- US 4799131 A
- US 5056030 A
- US 5175030 A
- WO 20030058383 A1
- WO 2004062904 A1
- WO 0029197 A
- US 2618012 A
- US 2988772 A
- US 3502766 A
- US 3807004 A
- US 3890421 A
- US 4330499 A
- US 4434128 A
- US 4349500 A
- US 4525317 A
- US 4853602 A
- US 4862564 A
- US 5826314 A
- US 5882774 A
- US 5962114 A
- US 5965247 A
- JP HEI511114 B
- JP 5288931 A
- JP 5288932 A
- JP 6027321 A
- JP 6034815 A
- JP HEI5241021 B
- JP 6051116 A
- JP 6051119 A
- JP 5011113 A
- WO 2002096622 A1
- US 6376065 B
- US 6609795 B
- US 60669865 B
- US 2006002141 A1
- US 6939499 B
- US 20040227994 A1


### Non-patent literature cited in the description


- Film Processing. 1999
- The Science and Technology of Polymer Films. 1968, vol. 1, 365-391471-429
- **Brousseau.** Fundamentals of Polarized Light. John Wiley and Sons